Europäisches Patentamt

European Patent Office

Office européen des brevets

(19)

(11) Publication number: **0 037 499**
**B1**

(12) **EUROPEAN PATENT SPECIFICATION**

(45) Date of publication of patent specification: **13.06.84**

(51) Int. Cl.³: **H 04 Q 3/54**

(21) Application number: **81102117.9**

(22) Date of filing: **23.03.81**

(54) Device interfacing a microprocessor bus and a synchronous periphery of sensors and drivers.

(30) Priority: **27.03.80 IT 6746880**

(43) Date of publication of application:
**14.10.81 Bulletin 81/41**

(45) Publication of the grant of the patent:
**13.06.84 Bulletin 84/24**

(84) Designated Contracting States:
**DE FR GB NL SE**

(56) References cited:
**DE - A - 2 810 434**
**GB - A - 2 004 163**

**INTERNATIONAL SWITCHING SYMPOSIUM**
**October 25-29, 1976, Kyoto, JP A. RESTA et al.**
**"DST1 : Fully electronic space-division**
**exchange" pages 221-3-1 to 221-3-8**

The file contains technical information
submitted after the application was filed and not
included in this specification

(73) Proprietor: **CSELT Centro Studi e Laboratori**
**Telecomunicazioni S.p.A.**
**Via Guglielmo Reiss Romoli, 274**
**I-10148 Turin (IT)**

(72) Inventor: **Rosboch, Luciano**
**Via Moretta, 31**
**Torino (IT)**
Inventor: **Tiribelli, Paolo**
**Via Telesilla, 25**
**Casalpalocco-Roma (IT)**
Inventor: **Giorcelli, Silvano**
**Via Metastasio, 27**
**Torino (IT)**
Inventor: **van Veen, Wouter M.D.**
**V. Canonico Maffei, 191**
**Ceretta-Torino (IT)**

(74) Representative: **Riederer Freiherr von Paar zu**
**Schönau, Anton**
**Freyung 615 Postfach 2664**
**D-8300 Landshut (DE)**

Note: Within nine months from the publication of the mention of the grant of the European patent, any person may
give notice to the European Patent Office of opposition to the European patent granted. Notice of opposition shall
be filed in a written reasoned statement. It shall not be deemed to have been filed until the opposition fee has been
paid. (Art. 99(1) European patent convention).

## Description

The invention relates to a device according to the prior art portion of claim 1. Such device is known from "ISS 76", pages 221-3-1 to 221-3-8.

The invention can be preferably, but not exclusively applied to processing units associated with electromechanical telephone exchanges.

It is known that nowadays many electromechanical exchanges are equipped with processors that receive information represented by the electrical criteria present in determined wires or devices and process it, to supply real time information on the good operation of the exchange, or statistical data, or information necessary to offer new services to the subscribers (e.g. charge documentation and the like). As a result of the processing, new control criteria can be sent to the exchange.

Generally the sensors and drivers are placed near the devices from which they pick up or to which they distribute said criteria, and are equipped with multiplexing or demultiplexing units allowing the transfer of serial and synchronous signal frames to and from the processor.

The term "synchronous" is used here to denote that to each criterion of the controlled or supervised devices is allotted a well defined time slot in the frame. By this disposition the connection between the periphery (sensors and drivers) and the centralised part (processor) requires a limited number of wires, thus reducing intallation cost. Besides the dialogue between the two parts is minimal, as the indentity of the device to which a given information pertains can be immediately deduced from the position of the information in the frame; this minimization of the dialogue allows the use of a periphery having a rather simple structure.

However, processors operate asynchronously, that is the processor receives and emits the information at the most convenient instants: therefore, in order to maintain the synchronous periphery structure a system is necessary which interfaces said periphery and the processor, and which is able to dialogue in an asynchronous way with the processor and to receive from or to send to the periphery the synchronous frames; this interfacing system, that is generally connected to the processor bus, will be located near the processor, for the same reasons that suggest the location of sensors and drivers near the exchange devices.

A number of devices interfacing a synchronous periphery of sensors and/or drivers and a control processor, that may be a microprocessor, are already known. Yet the known devices operate in connection with the general purpose processors that conveniently process the telephone signalling only if they are free from all repetitive tasks, such as signal integration, time metering and the like. These tasks are then carried out by the interface that acts as an actual preprocessor, and stores and makes available for the main processor data already processed instead of samples of the voltages forming the signalling criteria.

Particular, it is known (DE—B2—2810434) to use a general purpose processor which carries out a processing of the received signals and, as a consequence thereof, requires two separate memory devices or memory areas in which different kinds of information are stored, i.e. on one hand the information necessary for integration and the integration result, and on the other hand the samples to be restituted to the network. The prior art system requires that the number of sensors and the number of drivers be equal, and that a signal serial frame only is received or transmitted.

On the other hand, a system specified in ISS 76 (International Switching Symposium, October 25—29, 1976, Kyoto, JP, A. Resta et al "DST1: Fully electronic space-division exchange", pages 221-3-1 to 221-3-8) is known wherein the interfacing device is designed to cooperate with a microprocessor specifically designed to control a telephone network. Therein, a memory forms a centralized image of the state of the periphery. The memory locations are associated to terminal circuits, the stored informations being signaling messages (or words), which implies a preprocessing of the information sent to the memory. The management of the periphery occurs at least partly in time division. Such situation does not entirely allow the desired simplification of the periphery and information exchange and of the interfacing device itself.

A memory wherein the information necessary for carrying out a certain task is stored is known per se (GB—A—200463).

Compared to this, the object of the invention is to provide a proper interfacing device which makes available to the processor the actual criteria which it organizes so that the processor may have always at its disposal the updated periphery situation in the form of bits representative of the current state of the periphery.

This is obtained by the invention characterized in claim 1. Obviously, by use of the invention, the processor may have always at its disposal the updated periphery situation and may read or update the various criteria at the most suitable instants on the basis of the nature of the criteria themselves; the whole periphery can be managed simultaneously and the memory locations are associated with the sensors and drivers which may also be unequal in number, the information stored in the memory being bits representative of the current state of the periphery. Thus, an easy solution for a synchronous dialogue with the periphery and an asynchronous dialogue with the processor has been given.

The foregoing and other characteristics of the present invention will become clearer from the following description of a preferred embodiment thereof given by way of example and not in a limiting sense, in which:

— Figure 1 shows the insertion of the invention into a telephone exchange associated with a processor;
— Figure 2 is a block diagram of the invention;
— Figure 3 is a block diagram of the input gates for connection to the periphery;
— Figure 4 is the block diagram of the output gates for connection to the periphery;
— Figure 5 is a block diagram of the input-output logic for connection to the processor;
— Figures 6A, 6B, 6C are qualitative diagrams of some control or timing signals.

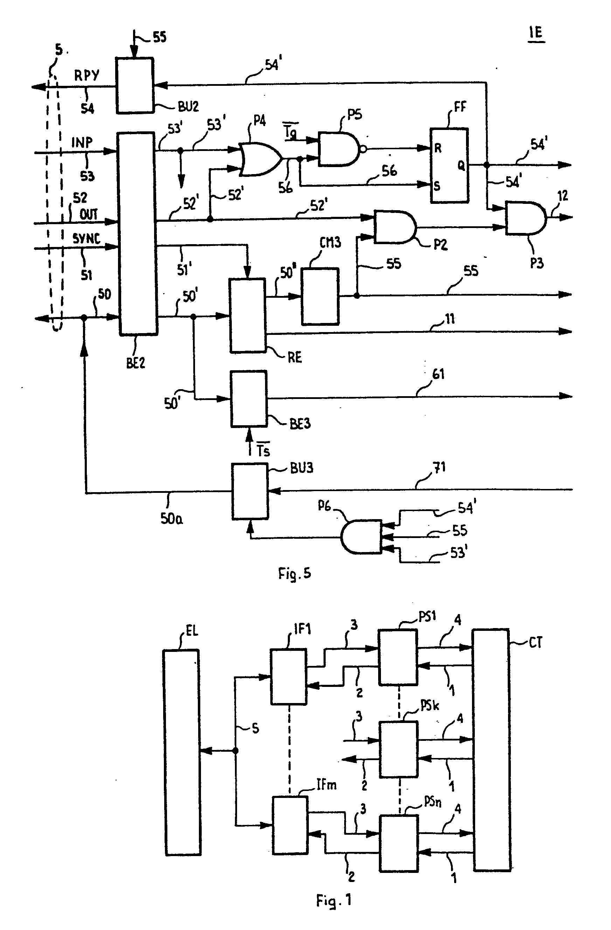

In Figure 1 a telephone exchange CT equipped with a processor EL is connected to a number of units PS1 ... PSk ... Psn forming the synchronous periphery of sensors and drivers picking up the critieria for processing in EL and distributing control criteria as a result of the processing.

Blocks PS1 ... PSk ... PSn on the one side cyclically pick up the criteria from all the devices to be surveyed (as schematically represented by connections 1) and organize them into serial frames that are sent in parallel, via balanced lines 2, towards one or more devices IF1 ... IFm that interface the synchronous periphery with asynchronously operating processor EL. In the other direction blocks PS1 ... PSn receive in parallel from their respective interfaces IF1 ... IFm, through balanced lines 3, serial frames of criteria and distribute said criteria through connections 4 to the exchange devices to be controlled.

The sensing part of blocks PS will for instance consist of banks of multiplexers controlled by a local (i.e. peripheral) timing unit synchronized by the centralized part by means of signals inserted in the frames sent along lines 3; moreover they will also comprise circuits converting the level of the criteria picked up from the value utilized in the exchange to a value apt to the transmission along lines 2, and inserting into the frames the necessary redundancies (more particularly parity bits) and information on the good operation of the periphery.

By way of example, the frames will be assumed to consist of 128 bits of data and other information for a total duration of 8 ms.

The driving part of blocks PS will consist of banks of demultiplexers for the parallelization of the information contained in the serial frames, of staticization registers, of circuits bringing the signal level from the value used for the transmission on lines 3 to that required by the exchange devices, and of circuits checking the redundancies in the arriving signals.

If the centralized part (interfaces IF1 ... IFm and processor EL) is duplicated for reliability purposes, blocks PS will also contain, as far as the drivers are concerned, switching circuits connecting the periphery to either of the twin units on the basis of the orders supplied by EL.

All the circuits that implement the above-mentioned functions for the sensors and the drivers are well known in the art and do not require any detailed description.

Interfaces IF1 ... IFm, connected to processor bus 5, must form a centralized "image", easily accessible by the processor, of the state of the periphery.

Consequently, each unit IF will basically consist of a random access memory and of the logic circuits for the memory addressing, reading and writing.

In that memory the frames coming from or sent to the periphery will be synchronously written or read, and words containing a certain number of bits, each associated to one sensor or driver in the periphery, will be asynchronously read or written.

As the synchronous frames comprise also redundancy bits (parity, synchronism words for the peripheral time bases, etc.), units IF will also comprise circuits checking or inserting said bits.

To operate as described above, units IF present a working cycle subdivided into a number of elementary time slots; a small fraction of each time slot will be allotted to the synchronous operations (frame reception and emission) while the remaining time will be allotted to the asynchronous operations requested by the processor.

Suitable timing signals control the alternance of the two operation modes. More particularly, the access to the interface by EL will be immediately granted when the access request arrives and can be satisfied within the time allootted to the asynchronous operations; otherwise the request will be satisfied during the subsequent period allotted to the processor. To this aim a guard time will be provided which begins before the period allotted to a synchronous operations, which comprises such a period and establishes the limit past which the request made by EL will not be satisfied immediately.

With the above assumptions for the frame length, each time slot of the working cycle of a unit IF will last 62.5 $\mu$s: the time devoted to synchronous operations may last 2 $\mu$s, and the guard time can begin 3 $\mu$s before the time allotted to synchronous operations, for a total duration of 5 $\mu$s.

Supposing also that TTL logic circuits are used for implementing the interface, during the time of 2 $\mu$s four synchronous operations can be effected (from four write operations, in case that the periphery associated to a unit comprises only sensors, to four read-operations, in case the periphery is composed of drivers only, including all the intermediate combinations). The input or output frames can then be divided into four groups and each synchronous operation will concern a bit of all the frames in a group.

By way of example hereinafter reference will be made to the effectuation of two write and two read operations.

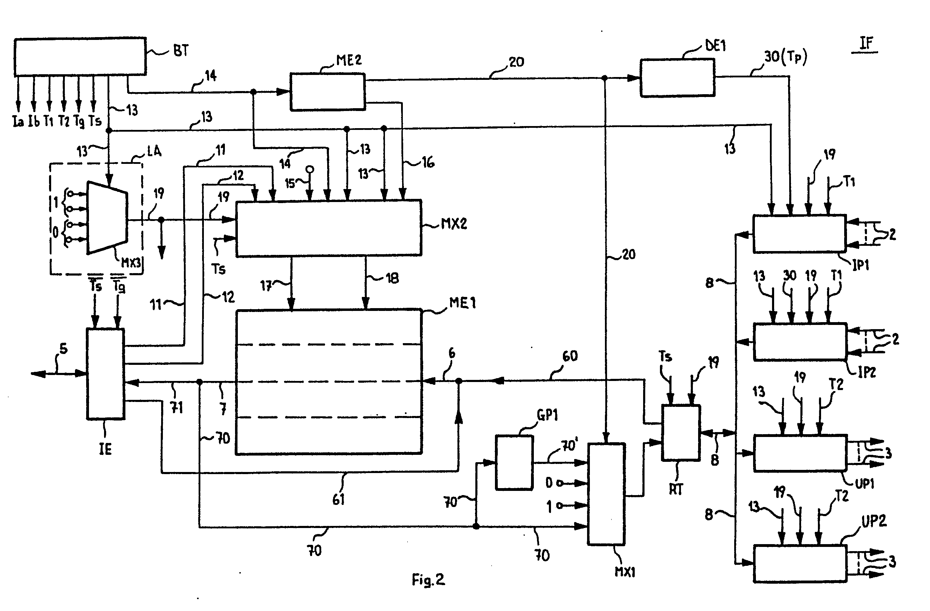

The structure and the operation of device IF will be described in further detail hereinafter, with reference to Figure 2.

Processor EL will be a microprocessor designed to process the telephone signalling: this means that the instructions for the signalling preprocessing will be microprogrammed in said processor: an example is described in "SEM' Studio di strutture per un sistema elaborativo modulare a microprocessori", CSELT Rapporti Tecnici, Vol. VI, n. 2 Giugno 1978. The use of a "telephonic" processor is essential for the interface to be an image of the periphery and to be free from processing tasks.

In Figure 2 reference ME1 denotes the random access memory forming the main element of the interface. Such a memory is organized into words containing as many bits as are the frames written or read in each synchronous operation (i.e. as are the frames in a group), as well as a number of parity bits. The whole of the words concerning a group of frames is allotted a memory block and therefore each block is entirely associated with sensors or drivers.

By way of example the words may consist of 16 data bits and two parity bits, one for each data bit octet: this means that each synchronous operation concerns 16 frames. Under the above assumptions, the memory will consist of 4 blocks of 128 words each comprising 18 bits, that is of 512 words.

Obviously, the memory capacity could be increased by increasing the time devoted to the synchronous operations. However that would be to the detriment of the processing power and therefore big exchanges will be associated with more blocks IF (as represented in Figure 1), and therefore with more memories ME1, each forming the "image" of a determined portion of the periphery.

The data to be written are sent to ME1 via an 18-wire connection or bus 6 that can receive the data from either the processor (through bus 5 thereof, an input-output logic IE and a bus 61) or the periphery (through connections 2, input gates IP1, IP2, a bidirectional bus 8, a transceiver or bidirectional buffer RT and a unidirectional bus 60). The data read are presented on a bus 7 and are sent either to the processor (through a bus 71), logic IE and bus 5) or to the periphery (through bus 70, a multiplexer MX1, buffer RT, bus 8, output gates UP1, UP2 and connections 3).

The addresses and the read-write commands are sent via a multiplexer MX2, that receives them either from the processor (for the asynchronous operations) or from a time base BT (for the synchronous operations). Multiplexer MX2 has three inputs and one output. The first input, selected for the asynchronous operations, receives from logic IE the addresses (through a connection 11) and the write/read command (via a wire 12).

The second input, selected during the synchronous write operations, receives from time base BT the write addresses: the most significant bits (that identify one out of the four blocks of 128 words) are present on a connection 13, while the least significant bits (that identify the word in the block) are present on a connection 14. A further input wire 15, connected to a fixed logic level, sends the memory the synchronous write command.

The third input, selected in case of synchronous read operation, is connected to connection 13 and to an output 16 of an EPROM memory ME2 addressed by the bits present on connection 14; ME2 will then have as many memory positions as are in a block of ME1; the tasks of this memory will be described hereinafter, in connection with the operation of the apparatus.

The outputs of MX2 are connection 17 for the addresses, and wire 18 for the commands.

The positioning of the multiplexer is controlled in conjunction by a bit Ts, supplied by the time base and distinguishing by its logic value the time allotted to synchronous operations from the time allotted to the asynchronous operations, and by the output bit of a logic network LA controlled by the two most significant bits of each address, present on connection 13.

During the time allotted to the asynchronous operations (for instance when Ts is 0), MX2 will always be positioned on its first input, whatever the output signal of LA may be; during the time intended for the synchronous operations, the output signal of LA will set MX2 on the second or the third input, according to whether a write or a read operation is to be effected. The structure of LA is therefore related with the configuration of memory ME1, i.e. with the association of the different blocks with sensors or drivers.

If ME1 has the above described structure, logic LA may consist of a four-input and one-output multiplexer MX3, controlled by the bit pattern present on connection 13.

Two inputs (for instance the first two) are steadily connected to a logic value 1 that, transferred to the output, means for instance synchronous writing; the remaining two inputs are connected to logic value 0 to mean the reading. Obviously the inputs can be associated with 1 and 0 in alternate way.

A logic network of this kind allows an easy adaptation to periphery configurations different from the described one; in fact it will be enough to connect to 1 (or to 0) a different number of inputs of MX3 in order to obtain a control of MX2 corresponding to the new configuration.

As shown, the positioning of MX2 on the second or third input depends upon the bits present on connection 13 which bits depend in turn on the subdivision into blocks of the memory; in this way during the synchronous write operations only the rows of the blocks associated with the sensors will be addressable, while during synchronous read operations only the rows of the blocks associated with the drivers will be addressable.

During asynchronous operations the processor has on the contrary access for both the write and read operations to any row of the memory, independant of its being allotted to sensors or drivers: this allows for instance the consecutive effectuation of a write and a read operation on the same row, as it can be requested by diagnostic tests on the memory.

Multiplexer MX1 presents four multiple inputs and one multiple output; a first input is connected to bus 70 that carries the data read in the memory and directed to the periphery; a second input is connected to the output of a parity generator GP1 whose input is connected to bus 70; two further inputs are connected in a fixed way to logic values 0 and 1 respectively.

Parity generator GP1 is subdivided into sixteen sections, associated each to one of the wires that in bus 70 carry the data bits, and generates bits of "serial" parity in the output frames; the two fixed inputs (also with 16 wires) are utilized to insert into the output frames the synchronism words (for instance 8 consecutive bits at logic level 1 preceded and followed by one bit at logic level 0).

The control of MX1 is supplied by signals present on an output 20 of memory ME2, and identifying the time slots allotted to parity and synchronism. The output of MX1 is connected to the unidirectional input of buffer RT.

Buffer RT is wholly conventional: for instance it will be realized by open-collector components.

RT will be enabled by signal TS (that is, during the time allotted to synchronous operations); the direction of the data passage is determined by the output signal of logic LA (wire 19) that as mentioned above causes the reading or writing in the memory.

Gates IP1, IP2, that in the example considered are associated each with sixteen lines 2 (that is with as many lines as are the frames that can be processed in parallel) have basically the tasks of:

— transforming the levels of the signals present on lines 2 into logic levels, more particularly TTL levels;
— checking the parity in the arriving serial frames, by replacing each parity bit by a bit denoting the check result;
— generating the parity bits ("parallel" parity) in the groups of bits sent in parallel onto bus 8.

Gates UP1, UP2, associated with 16 output lines 3, must:

— store the data read in the memory for the whole duration of a time slot (that is 62.5 $\mu$s);

— transform TTL logic levels into levels apt to the transmission on balanced lines 3.

The ratio between the number of input and output gates will be different in the case of periphery configurations different from the ones considered above. More particularly if the periphery consists only of drivers, input gates IP will be dispensed with; if the periphery consists only of sensors, gates UP can be eliminated.

In the latter case, the data input of MX1 (bus 70) can be fixedly connected to a logic level 0 that corresponds to the emission of empty data frames; also the input relative to the parity (bus 70') will be connected to a fixed logic level (more particularly 1, in case of odd parity); the inputs relative to the synchronism will be still connected as shown in the Figure; the output of MX1 will be directly connected to lines 3 through driving circuits: therefore practically only the synchronism signals will be present on these lines.

For their operation circuits IP, UP receive from the time base the two most significant address bits (connection 13), the signal denoting the read/write operations (wire 19) and other signals T1, T2 generated by the time base; these signals will be examined in further detail hereinafter.

Circuits IP are also connected to output 30 of a decoder DE1, that has its input connected to output 20 of ME2 and has the task of recognizing the time slot devoted to the parity.

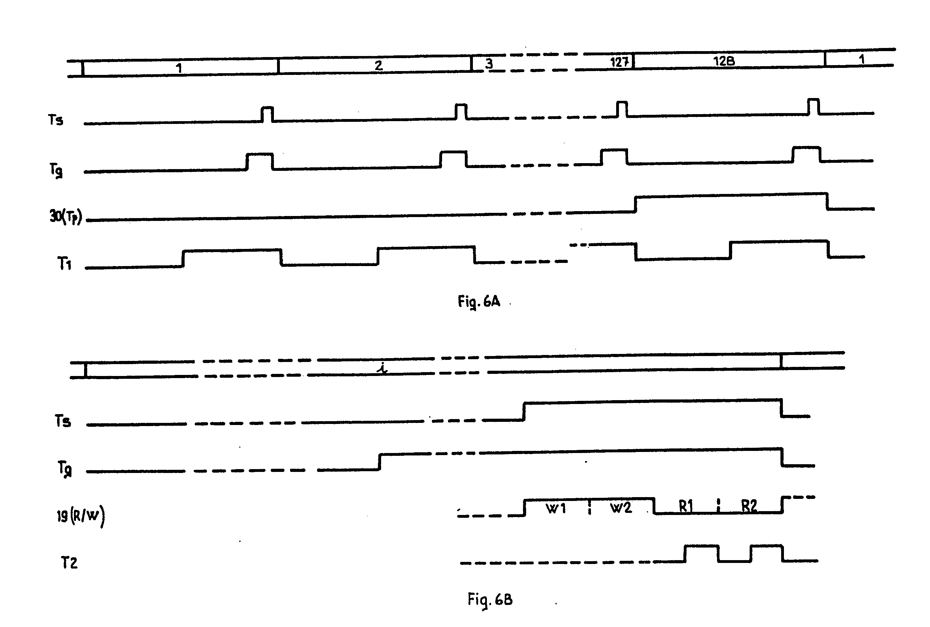

Circuit IE controls the dialogue between IF and the processor: it will be enabled to receive from or transmit to the processor the data, out of the guard time (signal $\overline{Tg}$), while the data transmission and reception to and from the memory is enabled during the time allotted to the asynchronous operations (signal $\overline{Ts}$): a possible embodiment of IE is represented in Figure 5.

The drawing also shows that the time base generates two further signals Ia, Ib that are sent to the processor to indicate the beginning of a synchronous write operation in a memory block and the beginning of the wire operation in the second half of the block. Thus the processor knows which half of the block contains the updated data, so that two asynchronous readings of data obtained from a same synchronous scanning are avoided.

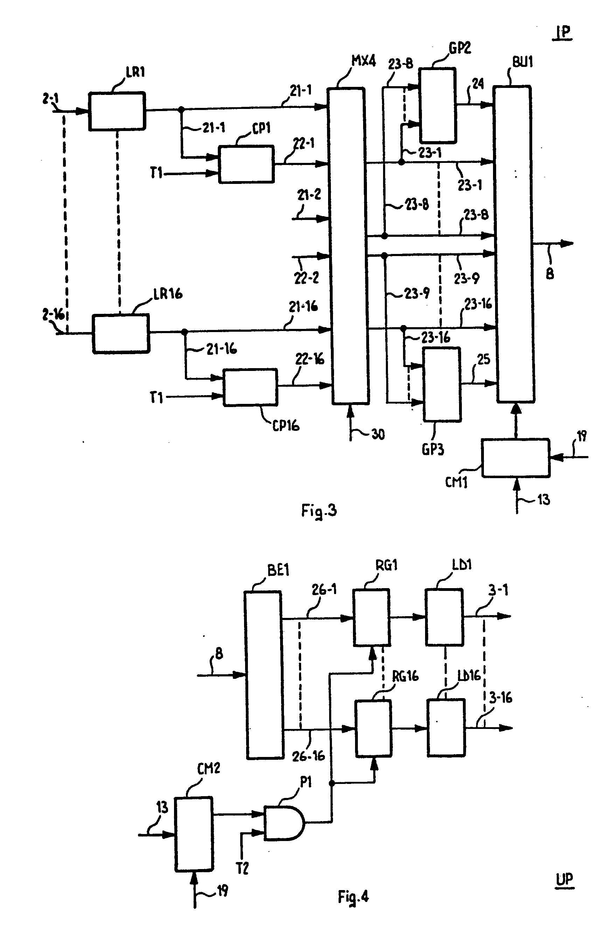

In Figure 3, line receivers LR1 ... LR16 (of any known type) are connected in the sixteen lines 2-1 ... 2-16 associated with one of the gates IP, to convert the balanced signals present on said lines 2 into TTL signals utilized in the interface IF. Outputs 21-1 ... 21-16 of receivers LR1 ... LR16 are connected both to a first group of inputs of a multiplexer MX4 and to the inputs of as many circuits CP1 ... CP16 that check the parity (serial parity) in the frames transmitted on lines 2. Outputs 22-1 ... 22-16 of circuits CP1 ... CP16 are connected to a second group of inputs of multiplexer MX4.

Multiplexer MX4 is usually positioned on its first group of inputs, and passes to the second group of inputs in the time slots allotted to the parity bits; the command is supplied by signal Tp present on output 30 of decoder DE1 (Figure 2). Circuits CP, well known in the art, are timed by signal T1, that establishes the instant of loading of the bits in CP.

The multiple output of MX4 consists of sixteen wires 23-1 ... 23-8, 23-9 ... 23-16 connected in parallel to as many inputs of an output buffer BU1, advantageously fabricated with open-collector (tristate) components; two further inputs of BU1 are connected respectively to the outputs 24, 25 of two parity generators GP2, GP3. Said parity generators are connected to the eight outputs 23-1 ... 23-8 and 23-9 ... 23-16 of MX4, respectively, and at each time slot generate the parity bit relative to the eight bits simultaneously present on their inputs. The output of BU1 is bus 8.

BU1 is enabled by the output signal of a comparator CM1, in which a code identifying circuit IP is preset. The comparator receives through connection 13 the most significant bits of the address relative to a write operation in the memory, and emits the output signal when the address indicates the block of memory with which that circuit IP is associated.

Comparator CM1 is enabled by the signal present on wire 19 when a write operation in memory ME1 is being effected.

With reference to Figure 4, an output gate UP is connected to bus 8 through a conventional input buffer BE1, having sixteen outputs 26-1 ... 26-16 connected to as many registers RG1 ... RG16, for instance D-type flip-flops. The register outputs are connected to lines 3-1 ... 3-16 through driving circuits LD1 ... LD16 that convert the TTL signals utilized in the interface into the balanced signals utilized for the transmission on said lines. The bit loading into the registers is controlled by the output signal of an AND gate P1, that receives at an input the timing signal T2 and at a second input the output signal of a comparator CM2, wherein a code for the identification of circuit UP is set.

In the same way as CM1 (Figure 3), CM2 has the input connected to connection 13 and emits the output signal when the write operation in the memory concerns the block associated with that circuit UP. The operation of CM2 is enabled by the signal present on wire 19 during a read operation in the memory.

Even though bus 8 comprises 18 wires, only 16 outputs of BE1 are utilized, as the two parity bits associated to each read word are not to be transferred the periphery.

In Figure 5 processor bus 5 has been represented as split into connection 50 for data and addresses, and wires 51, 52, 53, 54 conveying respectively a timing signal SYNC, a signal OUT indicating that the processor requests a write operation in the memory (that is a data output), a signal INP indicating that the processor requests a read operation in the memory (data input in the processor) and a signal RPY indicating that the request has been accepted by the interface.

Connection 50 and wires 51, 52, 53 are connected to input buffer BE2, that is permanently enabled. Wire 54 is the output of an open-collector output buffer BU2. Output wires 50' of BE2 corresponding to connection 50 are connected to the input of a register RE that is controlled by signal SYNC (that denotes the validity of an address sent by the processor) and stores the addresses, keeping them available for the whole operation.

A first set of outputs of RE, corresponding to those which in connections 50, 50' convey the address of the memory position interested in the operation, forms connection 11. A second set of outputs 50", corresponding to those wires which in connections 50, 50', carry the address of unit IF interested in the operation, is connected to the input of a comparator CM3.

A code for the identification of unity IF is set in this comparator, which emits a signal on its output 55 when the address sent by the processor and the address set in the comparator are the same.

This signal enables BU2 and it is also sent to an input of 2-input AND gate P2, whose second input is connected to output wire 52' of BE2 (corresponding to wire 52) on which the signal OUT is present. The output of P2 is connected to an input of an AND gate P3, whose output is wire 12 that carries the write command to memory ME1 (Figure 2).

The other iput of P3 is connected to output Q (wire 54') of a set-reset flip-flop FF whose set input is connected to output 56 of a 2-input OR gate P4, that receives at the second input the signal INP (through output wire 53' of BE2). The reset input of FF is connected to the output of a 2-input NAND gate P5, that has an input connected to output 56 of P4 and receives at the other input, as enabling signal, the signal $\overline{Tg}$; that is, P5 can let through the operation requests (signals INP, OUT) that arrive out of the guard time.

The output signal of FF is signal RPY that therefore can be sent to the processor through wire 54', buffer BU2 and wire 54 when a request for operation (write or read operations) arrives out of the guard time.

As to the data, wires 50' outgoing from BE2 enter also a further input buffer BE3 of the open-collector type, which is enabled during the time intended for asynchronous operations (signal $\overline{Ts}$); the output of BE3 is bus 61. Bus 71 conveying the data read is connected to the input of an output buffer BU3 of the open-collector type, enabled by the output signal of a NAND gate P6, having three inputs connected to wires 53', 54', 55: BU3 lets then through the data present at its input when a read operation in the memory has been requested by the unit IF of which BU3 makes part, and the request can be satisfied.

The output of BE3 is a bus 50a that joins the connection 50.

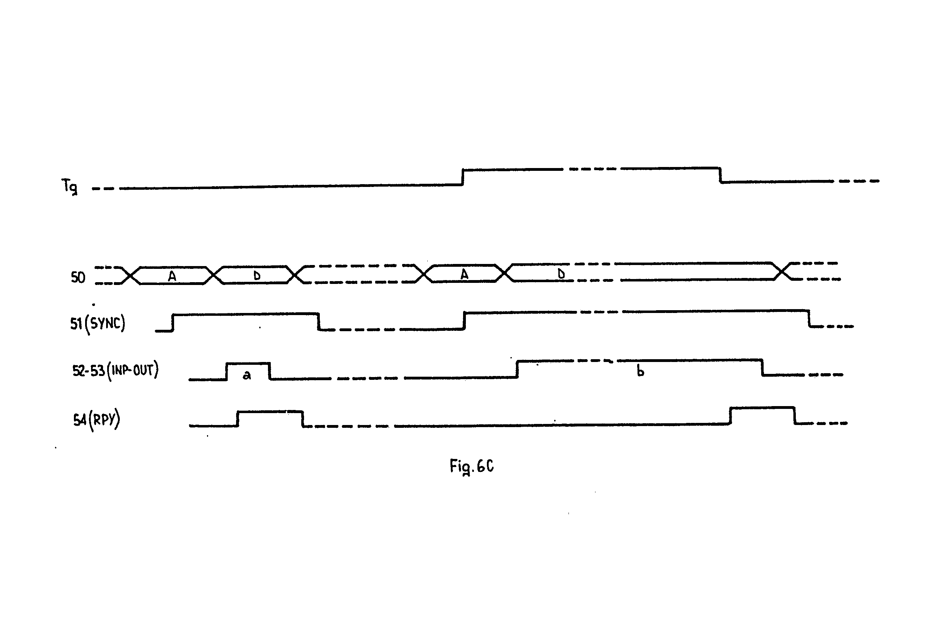

Figures 6A—6C show qualitatively some of the timing signals previously mentioned. The signals are identified both by their symbols and, whenever possible, by the reference numerals denoting the wires or connections on which they are present. More particularly, in Figure 6A there is represented a part of a 128-bit frame, with the assumption that the last bit is the parity bit whose time slot is identified by the passage to 1 of signal Tp. The passage to 1 of signals Ts and Tg identifies the time allotted to synchronous operations and the guard time. Signal T1, whose period is equal to the bit time, determines when passing to 1 the loading of the bits into circuits CP1 ... CP16 (Figure 3). To allow the results of the parity check on the last frame bit to be loaded into the memory, the passage to 1 of T1 must precede the time allotted to the synchronous operations (pulse of signal Ts). For instance, the leading edge of T1 can occur at half time slot and the time allotted to synchronous operations can begin near the end of the time slot. The pulse of T1 may even coincide with that of Tg.

It is to be appreciated that in the drawing the durations of the pulses of Ts and Tg are slightly exaggerated to make the drawing clearer.

Figure 6B shows the signals relating to the synchronous operations for the i-th time slot.

The signal R/W present on connection 19 has been supposed to be 1 during the write operation and 0 during the read time. Consistently with Figure 2, the two write operations (W1, W2) have been supposed to take place one after the other and to precede the two read operations (R1, R2). Signal T2 has a period equal to the duration of a synchronous operation and passes to 1 substantially at half the time allotted to each operation. Signals R/W and T2 have been represented only during the time allotted to synchronous operations and during the time allotted to read operations, respectively, as they are of no interest out of these time periods.

In Figure 6C references A, D in the row allotted to bus 50 denote respectively the presence on the bus of addresses or data. The signal SYNC (confirmation of address validity) passes to 1 somewhat after the sending of the address into bus 50a and remains at 1 substantially for the whole operation; signals INP, OUT are sent (i.e. they pass to 1) a little while after the end of address transmission and remain present until the reception of signal RPY by EL; afterwards they pass to 0. Signal RPY passes to 1 as a consequence of the arrival of INP or OUT; the passage to 1 is immediate if INP or OUT arrive out of the guard time, otherwise it will take place after the end of the guard time. RPY remains at 1 until about the end of the operation and its reset causes the reset of SYNC.

The operation of our invention will be now described, by investigating first the operations of circuits IP, UP, IE and then the read and write operations in the memory. These latter operations will be described in the sequence: synchronous writing, asynchronous reading, asynchronous writing and synchronous reading, and correspond to: picking up the state of the periphery from the sensors, transferring the information to the processor for the necessary processings, writing in the memory the commands for the drivers as results of the processings, and transmitting said commands to the periphery.

A) Input-output circuits.
1) Gates IP (Figure 3)

At each time slot of the frame, the signals present on the 16 lines 2-1 ... 2-16 (Figure 3) connected to one of the gates (for instance IP1) are received by circuits LR, converted into the form apt to the operation of the interface circuits, and then sent to multiplexer MX4 and parity check circuits CP1 ... CP16 where they are loaded when signal T4 (Figure 6A) passes to 1.

Until the beginning of the time slot allotted to "serial" parity, signal Tp on wire 30 remains 0 and positions MX4 (Figure 3) so as to let through the bits present on wires 21 and to send them on lines 23. These bits are then sent to output buffer BU1 together with the two bits of "parallel" parity, which are generated by GP2, GP3 for the two data bit octets (lines 23-1 to 23-8 and 23-9 to 23-16) and are present on wires 24, 25. When the address supplied by the time base through wires 13 indicates gate IP1 and the signal R/W on wire 19 is 1 (for instance during the first quarter of the period allotted to the synchronous operations, denoted by W1 in Figure 6B) buffer BU1 is enabled by CM1 to let through on bus 8 the 18 bits present at its inputs. In the subsequent quarter of the period allotted to the synchronous operations in that time slot (time W2), the second gate IP2 will be addressed and the other 18 bits will be transferred onto bus 8.

During the time slot allotted to the parity bit (the last in Figure 6A) signal Tp passes to 1 and then MX4 becomes connected to wires 22, picking up from CP1 ... CP16 the result of the parity check effected on the frame. When Ts passes to 1, BU1 can be again enabled and then the result of said check is transferred onto bus 8.

2) Gate UP (Figure 4)

At each time slot, the bits present on bus 8 upon a synchronous reading in the memory (signal R/W at 0, Figure 6B) pass through input buffer BE1 and arrive at registers RG1 ... RG16. Considering gate UP1, when the address on wire 13 indicates such a gate (time R1, Figure 6B) the output of CM2 is activated: as soon as signal T2 passes to 1, registers RG1 ... RG16 transfer the 16 bits to the output. Through driving circuits LD1 ... LD16 said bits are brought to the level suitable for the transmission on lines 3-1 ... 3-16 and transferred onto said lines, where they remain present till gate UP1 is addressed again.

The same operations are carried out for gate UP2, during the last quarter of the time allotted to synchronous operations (time R2, Figure 6B).

3) Logic IE (Figure 5)

The processor sends onto wires 50 the address concerned by the operation, that through input buffer BE2 arrives at the input of register RE. Then signal SYNC is sent and it causes, through BE2 and wire 51', the loading of the address bits into RE. As a consequence the address part that identifies module IF is presented on wires 50" while that relative to the memory cell passes onto wires 11; both address parts are kept present for the whole duration of the operation. If for instance circuit IE associated with IF1 is considered, when the address on wires 50" coincides with that set in comparator CM3, comparator output 55 is activated. Once the loading of the addresses has been effected, the processor sends through wire 52 or 53 the signal that indicates the type of operation (INP or OUT), said signal passing onto wire 52' or 53' through buffer BE2. Whichever signal is sent, OR gate P4 presents it on wire 56 to the input of gate P5 and to the set input of FF.

If the signal arrives before the guard time (pulse *a* in row 52—53 of Figure 6C) gate P5 is enabled and sets to 1 output Q of FF (wire 54', signal RPY). As output 55 of CM3 has been activated, buffer BU2 is enabled and then signal RPY can be sent to the processor. As a consequence the processor can send the data to be written or receive the read data (hexagon D in Figure 6C, row 50).

In case of a write operation, gate P2 transfers signal OUT to P3. Signal RPY is 1, and then the request for the write operation passes onto wire 12 towards the memory. The processor sends then the data that through bus 50, buffer BE2, wires 50' and buffer BE3 are presented onto bus 61: signal OUT has been supposed to arrive before the guard time; thus BE3 will be enabled (signal Ts at 0, that is $\overline{Ts}$ at 1).

Approximatively at the end of the sending of data, signal RPY is reset, what causes signal SYNC to be reset. Signal OUT had already been reset after the passage to 1 of RPY, as it was no longer necessary.

In case of a read operation, signal INP present on wire 53' is sent to P6 that has already received the signal present on wire 55; upon the activation of output 54' of FF, P6 enables buffer BU3 that transfers the bits of wire 71 onto bus 50a, and then onto bus 50.

If the signal indicating the type of operation arrives after the beginning of the guard time (Tg at 1), as it happens for pulse *b* in row 52—53 of Figure 6C, gate P5 is disabled as $\overline{Tg}$ is 0; as a consequence output Q of FF, and then the signal on wire 54' or 54, are at 0, that is signal RPY is not sent to the processor. The presence of a logic level 0 on wire 54' disables gates P3 and P6 and hence buffer BU3: the disabling of gate P3 prevents the possible write command from being sent to ME1 (Figure 2) through wire 12, while the disabling of P6, and then of BU3 prevents the data present in case of reading on bus 71 from being sent to the processor.

This situation lasts for the whole guard, time: as soon as Tg returns to 0, and therefore $\overline{Tg}$ passes to 1, output Q of FF passes to 1 and then signal RPY is emitted: the whole process develops in the same way as seen above.

B) Operations on the memory
1) Synchronous-write operation.

In the synchronous-write operation the bits relative to 32 frames, divided into two groups of 16 frames, must be transferred into the memory. It will be supposed that each frame comprises in succession first all the criteria of a first device, then all the criteria of the second device and so on, and that simultaneous time slots in the 16 frames of a group are allotted to a homologous criteria (considering also redundancies as "criteria"). This arrangement is preferred as it makes the processor tasks easier.

Taking this into account, during the synchronous writings signals Ts and R/W are both 1 (Figure 6B). Therefore buffer RT (Figure 2) is enabled to connect to write bus 60 (and then to bus 6) bus 8 carrying the bits outcoming from gates IP1, IP2. Furthermore the bit pattern on wires 13 will address one of the memory blocks associated with the sensors, so that multiplexer MX2 is positioned onto its second input (signal R/W at 1) and transfers onto wires 17, 18 the write command and the addresses. The time base sequentially generates all 128 addresses of a block; at each address, 16 bits relative to a same criterion and two parity bits will be memorized. When the write operation concerns the first and the 65-th rows, signals Ia, Ib will be sent to the processor by BT. With the assumption that two memory blocks are associated with sensors, two rows, one for each block, will be written in each time slot: both rows are addressed by the bit pattern on wires 14. The row of a block may or may not contain the same criteria as the homologous row of the other block.

2) Asynchronous read operation.

This operation is effected, as mentioned, if the corresponding request arrives out of the guard time, that is while Tg is 0. Under these conditions in fact signal RPY, whose presence is necessary to enable circuit IE to let through onto bus 5 the data present on bus 7 (and therefore 71), can be emitted.

In this phase multiplexer MX2 is positioned on its first input and it transfers onto connection 17 the address supplied by EL (Figure 1) through bus 5, circuit IE and connection 11.

As stated in connection with the operation of IE, during the reading phase neither wire 12 nor wire 17 are energized. This condition is interpreted by ME1 as read command and the word memorized at the wanted address is transferred onto bus 7.

The read address, being supplied by the processor, is asynchronous and therefore some words could be read more frequently than others. The reading periodicity will of course depend upon the type of criterion: for instance dialling criteria could be read every 10 ms, while a reading every second will be sufficient for the conversation criterion.

This fact requires that all bits in a memory row concern a same criterion, what is easy to obtain by the organisation described for the serial frames.

3) Asynchronous write operation

This operation is carried out in the same way as the asynchronous read operation. If the write request arrives out of the guard time, logic IE is enabled to transfer the data onto bus 61 and then onto bus 6; such enabling remains until signal Ts passes to 1. During the write operations wire 12 is energized; then MX2, that is positioned on its first input, transfers onto wire 18 the write command represented by the signal present on said wire 12.

During this phase the processor will advantageously write in sequence all the words relative to a same criterion; in this way the blocks of ME1 allotted to the drivers will be organized into groups of homologous rows.

4) Synchronous read operation.

In the synchronous read operation, frames organized in the same way as those present on lines 2 one to be sent on lines 3, that is all the criteria of a first device are sent first, then all the criteria of the second device, etc.

Criterion homogeneity in simultaneous time slots of the different frames is ensured by the fact that the read operation is effected by rows, and each row contains only homologous criteria.

During this phase signal T1 is 1 and signal R/W on wire 19 is 0.

Therefore MX2 is positioned on its third input and picks up the least significant address bits from memory ME2, instead of receiving them directly from the time base. There is no command on wire 18, and then ME1 is informed a reading is to be effected. Buffer RT will connect bus 8 to the output of MX1 (and then to buses 70 and 7). When the addresses correspond to time slots allotted to the actual - telephone criteria, MX1 will be positioned on the input directly connected to bus 70 and it will send said criteria to gates UP1, UP2; during the time slots allotted to serial parity or to synchronism the signal present on output 20 of ME2 will position MX1 onto the input connected to parity generator GP1 or to fixed logic levels 0, 1.

Obviously also during these time slots the bits are emitted at the instants determined by signals Ts and R/W. The two output gates UP1, UP2 will be enabled after each other in the same time slot, that is, also the reading concerns two rows per time slot.

As mentioned, in the memory blocks allotted to the drivers the homologous criteria are written in groups of subsequent rows; therefore, in case of a rigidly sequential reading (i.e. carried out as the writing) the bit patterns on lines 3 could simulate the synchronism words (a sequence of 8 bits at 1, followed by one bit 0, in the described embodiment).

EPROM memory ME2 has been introduced to avoid this: said memory, on the basis of the sequential addressing supplied by BT, generates such an address sequence as to prevent the occurrence of the above situation. For instance, if four criteria per device are emitted and one of them has logic value 1 only once in a frame, memory ME2 will modify the sequential address so that the reading of criteria is effected device by device: in this case at most 7 consecutive bits may be at 1 while, as mentioned, synchronism word requires a sequence of 8 bits.

This situation occurs for instance in exchanges which provide for the identification of a calling party at a time, the identification being effected by sending to an exchange device a suitable identification signal that is then looked for in a sensors frame. In this way only one identification bit for each frame is at logic level 1. If this is impossible, a number of bits, always at logic level 0, are to be inserted in suitable frame positions, chosen so as to interrupt the possible sequence of logic 1 in the information; obviously this entails a reduction in the number of drivers which can be controlled.

Generally it may be said that the association between the inputs and outputs of ME2 will depend upon the configuration of the synchronism words, on the nature of the criteria to be driven and then on the exchange structure, as well as on the way in which the processor writes in the memory. Obviously, the processor could already write the criteria so as to allow a sequential-read operation: in that case memory ME2 can be dispensed with.

An organization like the one above offers a number of advantages: first the processor is not linked to the frame repetition rate and therefore if can operate in really asynchronous way with respect to the periphery. In addition, the parallel processing of a high number of samples of the same criterion allows real time observation also of fast phenomena and the reduction of the complexity of the input/output circuits for connection to the periphery.

Furthermore, since the processor has access to all the memory blocks independant of their being allotted to sensors or drivers, the usual memory exercising can be performed, with evident diagnostic advantages; finally the storage of all the samples forming a frame, including check bits, makes the latter bits directly available for the processor, so that the check of the good operation of the periphery and the connection lines with the interface is made easier.

**Claims**

1. Device (IF) interfacing a bus (5) of a microprocessor (EL) designed to process the signalling criteria of a telecommunications network, and a periphery (PS1, ..., PSn) consisting of sensors and/or drivers designed to pick up from and distribute to the network said criteria, the device comprising a random access memory (ME1) that is to store information coming from and directed to the periphery (PS1, ...,PSn), and control circuits (MX2, ME2, LA) for the addressing, the reading and the writing in said memory (ME1), which circuits during a first part of each of a plurality of recurrent time slots allow the access to the memory by the microprocessor (EL), upon request thereof, while during a second part of each time slot they allow the cyclical reception and emission of said information from and towards the periphery, said interfacing device being characterized in that said memory (ME1), for storing information organized into a plurality of frames received in parallel from or to be transmitted in parallel to the periphery (PS1, ..., PSn) is organized in blocks of rows where each block is wholly associable either with sensors or with drivers and each row in a block comprises a first group of cells, each associated in one-to-one correspondence with a sensor or a driver or a redundancy, and stores a bit representing the current logic state of a same criterion, and other cells storing parity bits relevant to the bits stored in the first group of cells, the first group of cells containing as many cells as are the frames that can be sent or received in parallel; the device being further characterized in that during the first part of each time slot said control circuits (MX2, ME2, LA) allow the access to any row of any block of the memory (ME1) for both write and read operations, whereas during the second part of each time slot they allow the access to a row of each block associated with sensors for a synchronous write operation, and to a row of each block associated with drivers, for a synchronous read operation.

2. Device according to claim 1, characterized in that said control circuits comprise a multiplexer (MX2) that for synchronous write operation receives the write addresses directly from the time base (BT), so as to cause the sequential writing in the blocks of rows associated with the sensors, whereas for the synchronous read operations the multiplexer (MX2) connects to its output the output of an erasable and programmable read-only memory (ME2) that receives the addresses sequentially generated by the time base (BT) and changes the order thereof so that no bits of signalling criteria in the frames emitted towards the periphery simulate the bit sequence designed to synchronize the periphery operation with the time base of the device.

3. Device according to claim 2, characterized in that it further comprises means (GP1, MX1) designed to insert into the frames emitted towards the periphery synchronism sequences and bits of serial parity relative to the bits forming the frame, said means being controlled by said erasable and programmable read-only-memory (ME2).

4. Device according to one of claims 1 to 3, characterized in that it comprises input and output circuits (IP, UP) for connection to the periphery, each of them being associated with one of the memory blocks and receiving from or sending to the periphery as many frames in parallel as are the cells in the first group of cells of each row of othe random access memory (ME1), the circuits that receive the frames from the periphery (IP1, IP2) comprising means (CP1, ..., CP16) for checking the serial parity in the individual frames, means (MX4) for introducing the result of said check in place of the bits of serial parity, and means (GP2, GP3) for generating bits of parallel parity relative to the bits present in a same time slot in all the frames.

**Patentansprüche**

1. Schnittstellenschaltung (IF) zwischen einem Bus (5) eines Mikroprozessors (EL), der die Signalisierungskriterien eines Fernmeldenetzes verarbeiten soll, und einer Peripherie (PS1, ..., PSn) aus Sensoren und/oder Treibern, die vom Fernmeldenetz die Kriterien aufnehmen bzw. sie auf das Fernmeldenetz geben sollen, mit einem zugriffsfreien Speicher (ME1), der die von der Peripherie (PS1, ..., PSn) kommende Information und die zur Peripherie gerichtete Information speichern soll, und Steuerschaltungen (MX2, ME2, LA) für das Adressieren, das Lesen und das Schreiben im Speicher (ME1), die in einer Vielzahl sich wiederholender Zeitlagen während jeweils deren erstem Teil auf Anforderung durch den Mikroprozessor (EL) diesem Zugang zum Speicher geben und während jeweils deren zweitem Teil zyklisch Empfang und Aussendung der Informationen von der Peripherie und zu dieser zulassen, wobei die Schnittstellenschaltung dadurch gekennzeichnet ist, daß der Speicher (ME1), um in einer Mehrzahl von parallel von der Peripherie (PS1, ..., PSn) empfangene oder zu ihre zu sendende in Rahmen organisierte Information zu speichern, in Blocks von Zeilen organisiert ist, von denen jeder Block insgesamt entweder Sensoren oder Treibern zuzuordnen ist und jede Zeile im einzelnen Block eine erste Gruppe von Zellen umfaßt, von denen jede in 1-zu-1-Zuordnung einem Sensor oder einem Treiber oder einer Redundanz zugeordnet ist und ein den gegenwärtigen logischen Zustand eines selben Kriteriums anzeigendes Bit speichert, und weitere Zellen enthält, die auf die in der ersten Gruppe von Zellen gespeicherten Bits bezogene Paritätsbits speichern, wobei die erste Gruppe von Zellen so viele Zellen enthält, als Rahmen gleichzeitig gesendet oder empfangen werden können; und wobei die Schnittstellenschaltung weiterhin dadurch gekennzeichnet ist, daß während des ersten Teils jeder Zeitlage die Steuerschaltungen (MX2, ME2, LA) den Zugang zu einer beliebigen Zeile eines beliebigen Blocks des Speichers (ME1) sowohl für Schreib- als auch für Leseoperationen ermöglichen und während des zweiten Teils jeder Zeitlage den Zugang zu einer Zeile jedes Sensoren zugeordneten Blocks für eine synchrone Schreiboperation oder zu einer Zeile jedes Treibern zugeordneten Blocks für eine synchrone Leseoperation zulassen.

2. Schnittstellenschaltung nach Anspruch 1, dadurch gekennzeichnet, daß die Steuerschaltungen einen Multiplexer (MX2) umfassen, der für die synchronen Schreiboperationen die Schreibadressen unmittelbar von einem Zeitgeber (BT) zur Bewirkung des sequentiellen Schreibens in den den Sensoren zugeordneten Zeilenblöcken empfängt, während er für die synchronen Leseoperationen mit seinem Ausgang den Ausgang eines löschbaren und programmierbaren Festwertspeichers (ME2) verbindet, der die sequentiell vom Zeitgeber (BT) erzeugten Adressen empfängt und deren Reihenfolge so ändert, daß nicht Bits von Signalisierungskriterien in den zur Peripherie gesendeten Rahmen die Bitfolge simulieren, die zum Synchronisieren des Peripheriebetriebs mit dem Zeitgeber der Schnittstellenschaltung bestimmt sind.

3. Schnittstellenschaltung nach Anspruch 2, dadurch gekennzeichnet, daß sie weiterhin Einrichtungen (GP1, MX1) zum Einfügen von Synchronismussequenzen und von Bits serieller Parität, die sich auf die den Rahmen bildenden Bits beziehen, in die an die Peripherie abgegebenen Rahmen aufweist, die vom löschbaren und programmierbaren Festwertspeicher (ME2) gesteuert sind.

4. Schnittstellenschaltung nach einem der Ansprüche 1 bis 3, dadurch gekennzeichnet, daß sie Eingangsschaltungen (IP) und Ausgangsschaltungen (UP) für die Verbindung mit der Peripherie aufweist, von denen jede einem der Speicherblocks zugeordnet ist und so viele Rahmen parallel von der Peripherie empfängt bzw. an die Peripherie abgibt, als sich Zellen in der ersten Gruppe von Zellen jeder Zeile des zugriffsfreien Speichers (ME1) befinden, wobei die die Rahmen von der Peripherie empfangenden Schaltungen (IP1, IP2) Einrichtungen (CP1, ..., CP16) zum Überprüfen der seriellen Parität in den einzelnen Rahmen, Einrichtungen (MX4) zum Einführen des Ergebnisses dieser Überprüfung an der Stelle der Bits der seriellen Parität und Einrichtungen (GP2, GP3) zum Erzeugen von Bits paralleler Parität bezüglich der in gleicher Zeitlage in allen Rahmen vorhandenen Bits umfaßt.

**Revendications**

1. Dispositif (IF) faisant interface entre un bus (5) d'un microprocesseur destiné au traitement des critères de signalisation d'un réseau de télécommunications, et une périphérie (PS1 ... PSn) constituée par des explorateurs et/ou des distributeurs pour saisir du réseau et pour y distribuer lesdits critères, le dispositif comprenant une mémoire vive (ME1) qui doit mémoriser des informations venant de la périphérie (PS1 ... PSn) ou destinées à la périphérie (PS1 ... PSn), et des circuits de commande (MX2, ME2, LA) pour l'adressage, la lecture et l'écriture dans ladite mémoire qui, pendant la première partie de chacun des intervalles de temps d'une multiplicité d'intervalles périodiques, permettent l'accès à la mémoire par le microprocesseur (EL), d'après la requête de celui-ci, tandis que pendant une seconde de chaque intervalle de temps ils permettent la réception et l'émission cyclique desdites informations de et vers la périphérie, le dispositif d'interface étant caractérisé en ce que ladite mémoire (ME1), pour mémoriser des informations organisées en une multiplicité de trames reçues en parallèle de la périphérie (PS1 ... PSn) ou à transmettre en parallèle à la périphérie (PS1 ... PSn) est organisée en blocs de rangées dont chacun peut être entièrement associé à des explorateurs ou à des distributeurs, et chaque rangée dans un bloc comprend un premier groupe d'éléments, dont chacun est associé de façon biunivoque à un explorateur ou à un distributeur ou à une redondance et mémorise un bit représentatif de l'état logique courant d'un même critère, et d'autres éléments destinés à mémoriser des bits de parite relatifs aux bits mémorisés dans le premier groupe d'éléments, le nombre d'éléments dans le premier groupe d'éléments étant égal au nombre de trames qui peuvent être émises ou reçues en parallèle; le dispositif étant caractérisé en outre en ce que, pendant le première partie de chaque intervalle de temps, lesdits circuits de commande (MX2, ME2, LA) permettent l'accès à n'importe quelle rangée de n'importe quel bloc de la mémoire (ME1) tant pour les opérations d'écriture, que pour les opérations de lecture, tandis que pendant la seconde partie de chaque intervalle de temps ils permettent l'accès à une rangée de chaque bloc associé aux explorateurs, pour effectuer une opération d'écriture synchrone, et à une rangée de chaque bloc associé aux distributeurs, pour effectuer une opération de lecture synchrone.

2. Dispositif suivant la revendication 1, caractérisé en ce que lesdits circuits de commande comprennent un multiplexeur (MX2) qui, pour les opérations d'écriture synchrone, reçoit les adresses d'écriture directement de la base de temps (BT) de façon à commander l'écriture séquentielle dans les blocs de rangées associés aux explorateurs, tandis que, pour les operations de lecture synchrone, le multiplexeur (MX2) connecte à sa sortie la sortie d'une mémoire programmable et affaçable à lecture seulement (ME2), qui reçoit les adresses engendrées en séquence par la base de temps (BT) et qui en change l'ordre de telle façon que dans les trames émises vers la périphérie il n'y ait pas des bits des critères de signalisation qui reproduisent la séquence de bits destinée à synchroniser le fonctionnement de la périphérie avec la base de temps du dispositif.

3. Dispositif suivant la revendication 2, caractérisé en ce qu'il comprend aussi des moyens (GP1, MX1) pour insérer, dans les trames émises vers la périphérie, des séquences de synchronisation et des bits de parité sérielle relatifs aux bits qui forment la trame, lesdits moyens étant commandés par ladite mémoire programmable et affaçable à lecture seulement (ME2).

4. Dispositif suivant l'une quelconque des revendications 1 à 3, caractérisé en ce qu'il comprend des circuits d'entrée et de sortie (IP, UP) pour le raccordement à la périphérie, dont chacun est associé à un bloc de mémoire et est apte à recevoir de la périphérie ou à y envoyer autant de trames en parallèle qu'il y a d'éléments dans le premier groupe d'éléments de chaque rangée de la mémoire vive, les circuits qui reçoivent les trames de la périphérie (IP1, IP2) comprenant des moyens (CP1 ... CP16) pour le contrôle de la parité sérielle dans chaque trame, des moyens (MX4) pour introduire le résultat de ce contrôle à la place des bits de parité sérielle, et des moyens (GP2, GP3) pour engendrer des bits de parité en parallèle relatifs aux bits présents dans un même intervalle de temps dans toutes les trames.

Fig. 5

Fig. 1

IF

Fig.2

Fig.3

Fig.4

Fig. 6A

Fig. 6B

0 037 499

Fig. 6C